# EUROPEAN PATENT APPLICATION

(11) **EP 4 766 012 A1**
(43) Date of publication of application: **24.06.2026**
(21) Application number: 24857818.9
(22) Date of filing: 06.05.2024
(51) Int. Cl.: H04W 84/14, H04W 48/20

(54) **INFORMATION INDICATION METHOD AND APPARATUS, COMMUNICATION NODE, AND STORAGE MEDIUM**

(30) Priority: 30.08.2023 CN 202311116718
(71) Applicant: ZTE Corporation, Shenzhen, Guangdong 518057 (CN)
(72) Inventor: YUAN, Liquan, Shenzhen, Guangdong 518057 (CN)
(74) Representative: Aipex B.V.
(86) International application number: PCT/CN2024/091151
(87) International publication number: WO 2025/044268

(57) **Abstract**

Provided are an information indication method, an information indication apparatus, a communication node, and a storage medium. The information indication method includes: generating a first management frame, where the first management frame carries information about a UHR capability set supported by an access point of an AP MLD; and sending the first management frame over a first link. According to the method, the information about the UHR capability set supported by the access point is carried in the first management frame so that a non-AP MLD can determine whether the first management frame is from a UHR multi-link device or a non-UHR multi-link device by parsing a corresponding field in the first management frame. Thus, the non-AP MLD can perform information interaction with a peer AP MLD by using the UHR technologies jointly supported by both parties, thereby improving the throughput of data transmission of a multi-link communication system.

## Description

### TECHNICAL FIELD

The present application relates to the field of wireless communication technologies and, in particular, to an information indication method, an information indication apparatus, a communication node, and a storage medium.

### BACKGROUND

If stations affiliated with a multi-link device (MLD) are all access points (APs), the MLD is an access point multi-link device (AP MLD). If stations affiliated with an MLD are all non-access point (non-AP) stations (STAs), the MLD is a non-access point multi-link device (non-AP MLD). The non-AP MLD and the AP MLD may communicate with each other over different links.

With the development of ultra-high reliability (UHR) technologies, a UHR AP MLD, similar to an extremely high throughput MLD defined in IEEE 802.11be (Wi-Fi 7), also transmits a management frame on its operating channel. However, a UHR non-AP MLD cannot determine whether a received management frame is from a UHR AP MLD or from an extremely high throughput MLD, nor can it determine which UHR capabilities are supported by the UHR AP MLD. Therefore, how to indicate information about UHR capability set is an urgent technical problem to be solved by those skilled in the art.

### SUMMARY

Embodiments of the present application provide an information indication method, an information indication apparatus, a communication node, and a storage medium.

In a first aspect, embodiments of the present application provide an information indication method applied to an AP MLD. The information indication method includes the following.

A first management frame is generated, where the first management frame carries information about a UHR capability set supported by an access point of the AP MLD.

The first management frame is sent over a first link.

In an implementation, the first management frame further includes indication information, and the indication information is used for indicating whether neighboring access points of the access point support a UHR function.

In an implementation, the information indication method further includes the following.

A second management frame is received over the first link or a second link, where the second management frame includes a UHR identifier of a target access point supporting the UHR function among the neighboring access points, and the second management frame is used for acquiring information about a UHR capability set supported by the target access point.

A third management frame is sent over the first link or the second link, where the third management frame includes the information about the UHR capability set supported by the target access point.

In an implementation, the indication information is carried in at least one of the following fields: a neighbor report (NR) field, a reduced neighbor report (RNR) field, a multi-link element field, a reconfiguration multi-link element field, or a multiple basic service set identifier (MBSSID) field.

In an implementation, the indication information is represented by one specific identifier or a combination of identifiers in the at least one of the NR field, the RNR field, the multi-link element field, the reconfiguration multi-link element field, or the MBSSID field.

In an implementation, the information about the UHR capability set is carried in at least one of the following fields: a capability set field of a current link, a multi-link element field, a reconfiguration multi-link element field, or an MBSSID field.

In an implementation, the information about the UHR capability set includes at least one of the following: coordinated orthogonal frequency division multiple access (C-OFDMA), coordinated spatial reuse (C-SR), coordinated beamforming (C-BF), non-primary channel access, coordinated time division multiple access (C-TDMA), coordinated target wakeup time (C-TWT), a channel resource preemption technology, a relay technology, or a joint transmission technology.

In an implementation, the first management frame and the third management frame include at least one of the following: a beacon frame, a probe response frame, a multi-link probe response frame, an access network query protocol (ANQP) response frame, an association response frame, a reassociation response frame, a basic service set transition management (BTM) request frame, a link reconfiguration request frame, a link reconfiguration response frame, or a multi-link operation update response frame.

In a second aspect, embodiments of the present application provide an information indication method applied to a non-AP MLD. The information indication method includes the following.

A first management frame is received over a first link, where the first management frame carries information about a UHR capability set supported by an access point in an AP MLD.

Information interaction is performed with the access point according to the information about the UHR capability set.

In an implementation, the first management frame further comprises indication information and the indication information is used for indicating whether neighboring access points of the access point support a UHR function.

In an implementation, the first management frame is a basic service set transition management (BTM) request frame, and the first management frame further carries information about a UHR capability set supported by an access point recommended by the AP MLD.

In an implementation, the information indication method further includes the following.

A second management frame is sent over the first link or a second link, where the second management frame includes a UHR identifier of a target access point supporting the UHR function among the neighboring access points, and the second management frame is used for acquiring information about a UHR capability set supported by the target access point.

A third management frame is received over the first link or the second link, where the third management frame includes the information about the UHR capability set supported by the target access point.

In an implementation, the second management frame further includes information about a UHR capability set supported by a station of the non-AP MLD through which the second management frame is sent.

In an implementation, optionally, the second management frame further includes information about a UHR capability set supported by a station of the non-AP MLD other than a station through which the second management frame is sent.

In an implementation, the second management frame includes at least one of the following: a probe request frame, a multi-link probe request frame, an ANQP request frame, an association request frame, a reassociation request frame, a link reconfiguration request frame, or a multi-link operation update request frame.

In an implementation, the information indication method further includes the following.

A BTM response frame is sent over the first link, where the BTM response frame comprises at least one of the following: information about a UHR capability set supported by a target access point to be handed over to or information about a UHR capability set supported by another access point that belongs to a same AP MLD as the target access point.

In an implementation, the indication information is carried in at least one of the following fields: an NR field, an RNR field, a multi-link element field, a reconfiguration multi-link element field, or an MBSSID field.

In an implementation, the information about the UHR capability set includes at least one of the following: C-OFDMA, C-SR, C-BF, non-primary channel access, C-TDMA, C-TWT, a channel resource preemption technology, a relay technology, or a joint transmission technology.

In an implementation, the information about the UHR capability set is carried in at least one of the following fields: a capability set field of a current link, a multi-link element field, a reconfiguration multi-link element field, or an MBSSID field.

In an implementation, the information interaction is performed with the access point according to the information about the UHR capability set, which includes the following.

The information interaction is performed according to the information about the UHR capability set by using UHR technologies jointly supported by the access point and the non-AP MLD.

In a third aspect, embodiments of the present application provide an information indication apparatus integrated into an AP MLD. The information indication apparatus includes a processing module and a sending module.

The processing module is configured to generate a first management frame, where the first management frame carries information about a UHR capability set supported by an access point of the AP MLD.

The sending module is configured to send the first management frame over a first link.

In a fourth aspect, embodiments of the present application provide an information indication apparatus integrated into a non-AP MLD. The information indication apparatus includes a receiving module and a processing module.

The receiving module is configured to receive a first management frame over a first link, where the first management frame carries information about a UHR capability set supported by an access point of an AP MLD.

The processing module is configured to perform information interaction with the access point according to the information about the UHR capability set.

In a fifth aspect, embodiments of the present application provide a communication node including a memory and a processor, where the memory is configured to store a computer program which, when executed by the processor, causes the processor to perform the information indication method provided in the first aspect or the second aspect of the embodiments of the present application.

In a sixth aspect, embodiments of the present application provide a storage medium storing a computer program which, when executed by a processor, causes the processor to perform the information indication method provided in the first aspect or the second aspect of the embodiments of the present application.

According to the technical solution provided in the embodiment of the present application, the first management frame is generated and sent over the first link, and the information about the UHR capability set supported by the access point is carried in the first management frame, so that the non-AP MLD can determine whether the first management frame is from a UHR AP MLD or from an extremely high throughput MLD by parsing a corresponding field in the first management frame. Accordingly, information interaction may be performed with the peer AP MLD by using UHR technologies jointly supported by both parties, thereby improving data transmission throughput of a multi-link communication system.

### BRIEF DESCRIPTION OF DRAWINGS

FIG. 1 is a flowchart of an information indication method according to an embodiment of the present application.
FIG. 2 is a schematic diagram of a structure of information about a UHR capability set according to an embodiment of the present application.
FIG. 3 is a schematic diagram of a structure of an extended RNR field according to an embodiment of the present application.
FIG. 4 is a schematic diagram of a structure of an extended NR field according to an embodiment of the present application.
FIG. 5 is another flowchart of an information indication method according to an embodiment of the present application.
FIG. 6 is a structural diagram of an information indication apparatus according to an embodiment of the present application.
FIG. 7 is another structural diagram of an information indication apparatus according to an embodiment of the present application.
FIG. 8 is a structural diagram of a communication node according to an embodiment of the present application.

### DETAILED DESCRIPTION

It is to be understood that embodiments described herein are only intended to explain the present application and are not intended to limit the present application. The embodiments of the present application are described hereinafter in detail in conjunction with the drawings.

For ease of understanding by those skilled in the art, some concepts are first described below.

An NR field is described below. The NR field includes information about other neighboring APs (or AP MLDs, hereinafter collectively referred to as APs). The NR field is generally used when a STA (or a non-AP MLD, hereinafter collectively referred to as a STA) sends a query frame to a target AP to obtain information about other neighboring APs. The target AP returns a response frame to provide the requested information. For example, a STA may send an ANQP query frame to an AP, and the AP returns an ANQP response frame to the STA. Alternatively, in a roaming scenario or in a multi-AP load balancing scenario, an AP may actively recommend information about neighboring APs to a STA. The STA may confirm the information and send an association request or reassociation request to one of the recommended APs. For example, an AP may send a basic service set (BSS) transition management (BSS transition management, briefed as BTM) request frame to a STA, and the NR field in the BTM request frame may carry information about the recommended AP. The STA may send a BTM response frame, in which the NR field carries information about an AP to which the STA intends to connect. The STA may then send an authentication frame and a (re)association frame to establish a connection with the target AP. The meaning of each field in the NR field is shown in Table 1 below.

**Table 1**

| Field Name | Meaning |
|---|---|
| Element ID | Element identifier |
| Length | Element length |
| basic service set identifier (BSSID) | Basic service set identifier (medium access control (MAC) address) |
| BSSID Information | Basic service set identifier information field |
| Operating Class | Operating channel class |
| Channel Number | Channel number |
| PHY Type | Physical layer type |
| Optional Subelements | Optional subelements |
| AP Reachability | Indicating whether a neighbor AP can be probed |
| Security | Indicating whether a security parameter of the neighbor AP is the same as a security parameter of a current link |
| Key Scope | Indicating whether authenticator information of the neighbor AP is the same as authenticator information corresponding to the current link |
| Capabilities | Capability set information of the neighbor AP |
| Mobility Domain | Indicating whether a beacon frame sent by the neighbor AP carries a mobility domain element (MDE) field |
| High Throughput | Indicating whether the neighbor AP is an HT AP, that is, whether an HT capability set is supported |
| Very High Throughput | Indicating whether the neighbor AP is a VHT AP, that is, whether a VHT capability set is supported |
| FTM | Indicating whether the neighbor AP supports a fine timing measurement (FTM) function |
| High Efficiency | Indicating whether the neighbor AP is an HE AP, that is, whether an HE capability set is supported |
| ER BSS | Indicating whether the neighbor AP is an AP supporting an extended range (ER) function |
| Colocated AP | Indicating that the neighbor AP and an AP corresponding to the current link are collocated on one physical device |
| Unsolicited Probe Responses Active | Indicating that the neighbor AP can send an unsolicited probe response frame every 20 ms in the 6 GHz frequency band |
| Members of ESS with | Indicating that the neighbor AP operates in a frequency band |
| 2.4 or 5GHz Colocated AP | of 2.4 GHz or 5 GHz and is collocated on one physical device with a current AP |
| OCT Supported With Reporting AP | Indicating that an AP on the current link and the neighbor AP support interaction of a medium access control (MAC) management protocol data unit (MMPDU) by using the on-channel tunneling (OCT) technology |
| Colocated With 6GHz AP | Indicating that the neighbor AP operates in the 6 GHz frequency band and is colocated on one physical device with the current AP |
| Extremely High Throughput | Indicating whether the neighbor AP is an EHT AP, that is, whether an EHT capability set is supported |
| Reserved | Reserved field |

An RNR field is described below. The RNR field includes information about other neighboring APs. To reduce channel resource overhead caused by the length of the NR field, the RNR field is defined based on the NR field and includes only key information of neighboring APs, such as an operating channel, a service set identifier (SSID), and BSSID information. When a STA receives a management frame sent by an AP that carries the RNR field, such as a beacon frame or a probe response frame, the STA can quickly discover other neighboring APs. The STA may then perform probing on the channel on which a target AP is located to obtain complete information about the target AP. In this way, time overhead caused by scanning channels without prior information and probing neighboring APs can be reduced. The meaning of each field in the RNR field is shown in Table 2 below.

**Table 2**

| Field Name | Meaning |
|---|---|
| Element ID | Field/element identifier |
| Length | Total element length |
| TBTT information Header | Target beacon transmission time (TBTT) information header |
| Operating Class | Operating channel class |
| Channel Number | Operating channel number |
| TBTT information set | TBTT information set |
| Neighbor AP TBTT offset | Offset between TBTT of the neighbor AP and TBTT of the current AP |
| BSSID | Basic service set identifier, typically an AP MAC address |
| Short SSID | Short service set identifier |
| BSS parameter | Basic service set parameter |
| 20MHz PSD | 20 MHz power spectral density |
| OCT Recommended | Operating channel tunnel recommended |
| Same SSID | Having the same SSID as the current AP |
| Multiple BSSID | Supporting the multiple BSSID technology |
| Transmitted BSSID | Transmitted BSSID in the multiple BSSID technology |
| Member of ESS 2.4 or 5GHz collocated AP | Indicating that the neighbor AP operates in the frequency band of 2.4 GHz/5 GHz, is collocated on one physical device with the current AP, and belongs to the same extended service set (ESS) |
| Unsolicited probe response active | Supporting unsolicited probe response mode |
| Collocated AP | Indicating that the neighbor AP is collocated on one physical device with the current AP |
| MLD Parameters | Parameters of an MLD |
| AP MLD ID | Indicating the relative number of a neighbor AP MLD |
| Link ID | Indicating the number of each link in an AP MLD |
| BSS Parameters Change Count | Count of service set parameter updates |
| ALL Updates Included | All updates included |
| Disabled Link Indication | Disabled link indication |
| Reserved | Reserved |

A multi-link element field is described below. This field is widely used in a discovery stage and a connection stage. For example, the multi-link element field may be carried in a beacon frame, a multi-link (ML) probe request frame, or a multi-link (ML) probe response frame during the discovery stage, or in an association request frame, an association response frame, a reassociation request frame, or a reassociation response frame during the connection stage. The multi-link element field may include a multi-link control field (Multi-Link Control) for indicating whether other related information fields are carried, a common information field (Common Info), and one or more link information fields (Link Info).

An MBSSID element field is described below. Multiple APs may be created on a single radio frequency (RF) link, and each AP corresponds to a different BSSID. To reduce channel resource overhead for transmitting beacon frames and probe response frames by each AP, the IEEE 802.11 protocol introduces an MBSSID mechanism. Under this mechanism, beacon frames and probe response frames transmitted by multiple APs on the same RF link may be combined into a single beacon frame or probe response frame transmitted by one AP. The beacon frame or probe response frame of the one AP may carry information about other APs on the same RF link, and such information is placed in an MBSSID element field. The MBSSID element field may include an element identifier (Element ID), a length field (Length), a maximum BSSID indicator (MaxBSSID Indicator), and optional subelements (Optional Subelements), where detailed information about other APs is stored in the optional subelements.

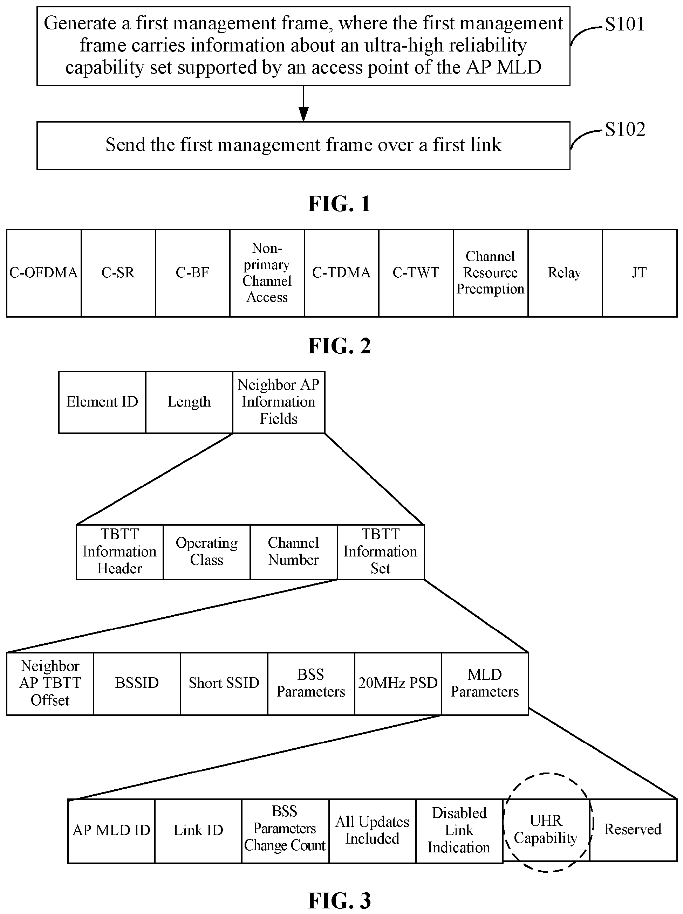

FIG. 1 is a flowchart of an information indication method according to an embodiment of the present application. The information indication method is applied to an access point multi-link device (AP MLD), and may be implemented by an access point of the AP MLD. In the following embodiments, the AP MLD is taken as an example of an execution entity for illustration. As shown in FIG. 1, the information indication method may include the following.

In S101, a first management frame is generated, where the first management frame carries information about a UHR capability set supported by an access point of the AP MLD.

In S102, the first management frame is sent over a first link.

The access point may carry the information about the UHR capability set in a capability set field of a current link, and send the first management frame over the current link (that is, the first link identified by AP1) to a STA in a peer non-AP MLD.

Optionally, the first management frame may include at least one of the following: a beacon frame, a probe response frame, a multi-link probe response frame, an ANQP response frame, an association response frame, a reassociation response frame, a BTM request frame, a link reconfiguration request frame, a link reconfiguration response frame, or a multi-link operation update response frame.

The information about the UHR capability set specifically indicates UHR technologies supported by the access point. As shown in FIG. 2, the information about the UHR capability set may include at least one of the following: C-OFDMA, C-SR, C-BF, non-primary channel access, C-TDMA, C-TWT, a channel resource preemption technology, a relay technology, or a joint transmission technology.

According to the technical solution provided in the embodiment of the present application, the first management frame is generated and sent over the first link, and the information about the UHR capability set supported by the access point is carried in the first management frame, so that the non-AP MLD can determine whether the first management frame is from a UHR AP MLD or from an extremely high throughput multi-link device by parsing a corresponding field in the first management frame. Accordingly, information interaction may be performed with the peer AP MLD by using UHR technologies jointly supported by both parties, thereby improving data transmission throughput of a multi-link communication system.

In an embodiment, optionally, the first management frame further includes indication information, and the indication information is used for indicating whether neighboring access points of the access point support a UHR function.

The foregoing neighboring access points may include other access points that belong to the same AP MLD as the access point or may include access points in other neighboring AP MLDs of the access point. Optionally, the indication information may be carried in at least one of the following fields: an NR field, an RNR field, a multi-link element field, a reconfiguration multi-link element field, or an MBSSID field.

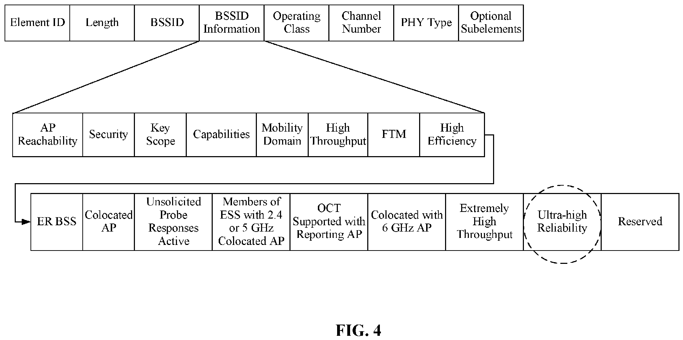

Optionally, the indication information may be represented by a specific identifier or a combination of identifiers in the foregoing fields. For example, the indication information may be represented by corresponding information added into a reserved field of the NR field, the RNR field, the multi-link element field, the reconfiguration multi-link element field, or the MBSSID field. Alternatively, the indication information may be jointly represented by redefining an existing field in the NR field, the RNR field, the multi-link element field, the reconfiguration multi-link element field, or the MBSSID field. For example, as shown in FIGS. 3 and 4, a reserved field in the RNR field or the NR field may be extended. For instance, UHR Capability may be added into a reserved field of the original RNR field as the indication information, or UHR may be added into a reserved field of the original NR field as the indication information, to indicate whether the reported access point or link supports the UHR capability set.

Further, after the AP MLD sends the first management frame over the first link, the non-AP MLD may discover the access points in the neighbor AP MLDs or access points on other links of the same AP MLD through the NR field, the RNR field, the multi-link element field, the reconfiguration multi-link element field, or the MBSSID field and the non-AP MLD may further distinguish, according to a specific identifier (or an identifier combination) of each access point, whether these discovered access points are non-UHR access points or access points that support the UHR capability set. For an access point (identified by AP2) supporting the UHR capability set, the non-AP MLD may send a second management frame over the first link or a second link on which AP2 is located, to acquire information about a UHR capability set supported by AP2, that is, to acquire which UHR technologies are specifically supported by AP2.

In an embodiment, optionally, the AP MLD receives, over the first link or the second link on which a target access point (for example, AP2) is located, the second management frame sent by the non-AP MLD. The second management frame includes a UHR identifier of the target access point supporting the UHR function among the neighboring access points, and the second management frame is used for acquiring information about a UHR capability set supported by the target access point. Optionally, the second management frame may include at least one of the following: a probe request frame, a multi-link probe request frame, an ANQP request frame, an association request frame, a reassociation request frame, a link reconfiguration request frame, or a multi-link operation update request frame.

Further, the AP MLD may send a third management frame over the first link or the second link. The third management frame carries information about the UHR capability set supported by the target access point. The third management frame may be understood as a response frame to the second management frame and is used for providing the requested information about the UHR capability set supported by the target access point to the STA. For example, the third management frame may be a probe response frame, a multi-link probe response frame, an ANQP response frame, an association response frame, a reassociation response frame, a link reconfiguration response frame, or a multi-link operation update response frame. Optionally, the information about the UHR capability set may be included in a multi-link element field, a reconfiguration multi-link element field, or an MBSSID field. For example, the information about the UHR capability set may be carried in the Link Info field of the multi-link element, or may be carried in optional subelements of the MBSSID field.

It should be noted that when all links in the same AP MLD support the UHR function, the UHR capability sets supported by the links may be identical or different. For example, the UHR capability set supported by link 1 of the AP MLD may include UHR technology 1, UHR technology 2, and UHR technology 3, while the UHR capability set supported by link 2 may include UHR technology 3, UHR technology 4, and UHR technology 5. Accordingly, one or more UHR technologies supported by different links may differ.

In this manner, in a scenario where UHR AP MLDs and non-UHR access points (for example, enhanced high throughput access points) are deployed together, the first management frame carries indication information indicating whether neighboring access points support the UHR function. After receiving the first management frame, the non-AP MLD can determine, based on the indication information, whether the neighboring access points are non-UHR access points or UHR AP MLDs. In addition, the third management frame carries information about the UHR capability set supported by the target access point, as requested by the non-AP MLD. Accordingly, the non-AP MLD may perform information interaction by using UHR technologies jointly supported by both the target access point and the non-AP MLD, thereby improving data transmission throughput.

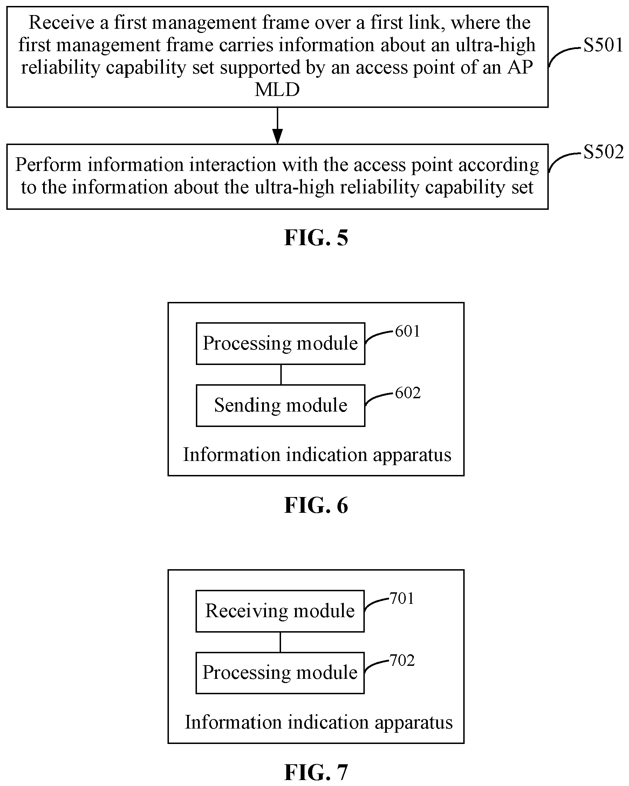

FIG. 5 is another flowchart of an information indication method according to an embodiment of the present application. The information indication method is applied in a non-AP MLD. In the following embodiments, the non-AP MLD is taken as an example of an execution entity for illustration. As shown in FIG. 5, the information indication method may include the following.

In S501, a first management frame is received over a first link, where the first management frame carries information about a UHR capability set supported by an access point of an AP MLD.

In S502, information interaction is performed with the access point according to the information about the UHR capability set.

The AP MLD may carry the information about the UHR capability set supported by the access point in a capability set field of a current link and send, over the current link (that is, the first link identified by AP1), the information about the UHR capability set supported by the access point to a corresponding station (STA) of the non-AP MLD. After receiving the first management frame, the non-AP MLD parses a corresponding field in the first management frame to determine that an access point that sends the first management frame is an access point that supports a UHR function and specific UHR capabilities supported by the access point. Further, the non-AP MLD can perform, according to the information about the UHR capability set supported by the peer access point, the information interaction by using UHR technologies jointly supported by a peer AP MLD and the non-AP MLD.

Optionally, the first management frame may include at least one of the following: a beacon frame, a probe response frame, a multi-link probe response frame, an ANQP response frame, an association response frame, a reassociation response frame, a BTM request frame, a link reconfiguration request frame, a link reconfiguration response frame, or a multi-link operation update response frame.

The information about the UHR capability set specifically indicates UHR technologies supported by the AP MLD and may include at least one of the following: C-OFDMA, C-SR, C-BF, non-primary channel access, C-TDMA, C-TWT, preemption, relay, or JT.

According to the technical solution provided in the embodiment of the present application, the first management frame is generated and sent over the first link, and the information about the UHR capability set supported by the access point is carried in the first management frame, so that the non-AP MLD can determine whether the first management frame is from a UHR AP MLD or from an extremely high throughput multi-link device by parsing a corresponding field in the first management frame. Accordingly, information interaction may be performed with the peer AP MLD by using UHR technologies jointly supported by both parties, thereby improving data transmission throughput of a multi-link communication system.

In an embodiment, optionally, the first management frame further includes indication information, and the indication information is used for indicating whether neighboring access points of the access point support the UHR function.

The foregoing neighboring access points may include other access points that belong to the same AP MLD as the access point or may include access points in other neighboring AP MLDs of the access point. Optionally, the indication information may be carried in at least one of the following fields: an NR field, an RNR field, a multi-link element field, a reconfiguration multi-link element field, or an MBSSID field.

Optionally, the indication information may be represented by a specific identifier or a combination of identifiers in the foregoing fields. For example, the indication information may be represented by corresponding information added into a reserved field of the NR field, the RNR field, the multi-link element field, the reconfiguration multi-link element field, or the MBSSID field. Alternatively, the indication information may be jointly represented by redefining an existing field in the NR field, the RNR field, the multi-link element field, the reconfiguration multi-link element field, or the MBSSID field.

Further, after the AP MLD sends the first management frame over the first link, the non-AP MLD may discover the access points in the neighbor AP MLDs or access points over other links of the AP MLD through the NR field, the RNR field, the multi-link element field, or the MBSSID field, and the non-AP MLD may further distinguish, according to a specific identifier (or an identifier combination) of each access point, whether these access points are non-UHR access points or access points that support the UHR capability set. For an access point (identified by AP2) supporting the UHR capability set, the non-AP MLD may send a second management frame over the first link or a second link on which a target access point (for example, AP2) is located. The second management frame includes a UHR identifier of the target access point supporting the UHR function among the neighboring access points, and the second management frame is used for acquiring information about a UHR capability set supported by the target access point. Optionally, the second management frame may include at least one of the following: a probe request frame, a multi-link probe request frame, an ANQP request frame, an association request frame, a reassociation request frame, a link reconfiguration request frame, or a multi-link operation update request frame.

Further, the non-AP MLD receives a third management frame over the first link or the second link on which the target access point (for example, AP2) is located, where the third management frame includes the information about the UHR capability set supported by the target access point. The third management frame may be understood as a response frame for the second management frame and is used for feeding back the requested information about the UHR capability set supported by the target AP to the STA. For example, the third management frame may be a probe response frame, a multi-link probe response frame, an ANQP response frame, an association response frame, a reassociation response frame, a link reconfiguration response frame, or a multi-link operation update response frame. Optionally, information about UHR capability sets supported by the foregoing neighboring access points may be included in multi-link element fields, reconfiguration multi-link element fields, or MBSSID fields.

In this manner, in the scenario where UHR AP MLDs and non-UHR access points (for example, enhanced high throughput access points) are both deployed, the indication information for indicating whether the neighboring access points of the access point support the UHR function is carried in the first management frame, and after receiving the first management frame, the non-AP MLD can determine, through the indication information in the first management frame, whether the neighboring access points are the non-UHR access points or the UHR AP MLDs. In addition, the second management frame is sent to the AP MLD to request the information about the UHR capability set supported by the target access point. The third management frame that is sent by the AP MLD and responds to the second management frame is received. The third management frame is parsed so that the requested information about the UHR capability set specifically supported by the target access point is obtained. Thus, the information interaction may be performed by using the UHR technologies jointly supported by both the target access point and the non-AP MLD, thereby improving the throughput of the data transmission.

In an embodiment, optionally, the first management frame may be the BTM request frame. When the first management frame is the BTM request frame, the first management frame further includes information about a UHR capability set supported by an access point recommended by the AP MLD. That is, in a fast BSS transition process, the AP MLD may send the BTM request frame to the non-AP MLD connected to the AP MLD, and an NR field in the BTM request frame carries information about other neighboring access points that are recommended, where the information may include information about a UHR capability set supported by each access point. In this manner, the non-AP MLD may determine, according to the information about the UHR capability set supported by each access point, whether a handover to the target access point is necessary. Optionally, after the BTM request frame is received, the non-AP MLD may further send a BTM response frame over the first link. An NR field in the BTM response frame may include information about a UHR capability set supported by a target access point to be handed over to and/or information about a UHR capability set supported by another access point that belongs to the same AP MLD as the target access point.

In an embodiment, optionally, the second management frame sent by the non-AP MLD may further include information about a UHR capability set supported by the station (or the present link) of the non-AP MLD. For example, in a single-link connection establishment process, the non-AP MLD may send an association request frame or reassociation request frame over the first link. The association request frame or reassociation request frame carries the information about the UHR capability set of the station (or the link), so as to request the establishment of a connection to the AP MLD.

Optionally, the second management frame sent by the non-AP MLD may include not only information about a UHR capability set supported by a station in the non-AP MLD through which the second management frame is sent, but also information about a UHR capability set supported by a station in the non-AP MLD other than the station through which the second management frame is sent. For example, in a multi-link connection establishment process, the non-AP MLD may send an association request frame or a reassociation request frame over the first link. The association request frame or reassociation request frame may carry information about the UHR capability set of the station (or the corresponding link) and information about the UHR capability set of another station (or another link) of the non-AP MLD.

In this manner, by carrying, in the second management frame, information about the UHR capability set supported by the station through which the second management frame is sent and information about the UHR capability set supported by a station of the non-AP MLD other than the station through which the second management frame is sent, the AP MLD can, after receiving the second management frame, determine the UHR capability set supported by the peer non-AP MLD. Accordingly, information interaction may be performed on one or more links by using UHR technologies jointly supported by the access point and the non-AP MLD, thereby improving data transmission throughput of the multi-link communication system.

It should be noted that when all links in the same non-AP MLD support the UHR function, the UHR capability sets supported by the links may be identical or different. For example, the UHR capability set supported by link 1 of the non-AP MLD may include UHR technology 1, UHR technology 2, and UHR technology 3, while the UHR capability set supported by link 2 may include UHR technology 3, UHR technology 4, and UHR technology 5. Accordingly, one or more UHR technologies supported by different links may differ.

Next, a discovery process, a connection process, and a fast roaming process of an MLD are described as examples.

### I. Discovery process

The AP MLD sends the first management frame over the first link, the non-AP MLD receives the first management frame, and after receiving the first management frame, the non-AP MLD may perform the following actions.
1. The non-AP MLD determines, based on the information about the UHR capability set supported by the access point of the AP MLD included in the first management frame, the UHR technologies supported by the peer AP MLD, and may perform information interaction with the peer by using the UHR technologies jointly supported by both parties.
2. The non-AP MLD discovers the neighboring access points through access point neighbor information fields included in the first management frame and further distinguishes, according to indication information of each neighboring access point (identified by AP2), whether the neighboring access points are non-UHR access points or the access points that support the UHR capability set.
3. For a target access point among the neighboring access points that supports the UHR capability set, the non-AP MLD may send a second management frame to the AP MLD over the first link or over a second link on which the target access point is located. The second management frame includes a UHR identifier of the target access point and is used for acquiring information about the UHR capability set supported by the target access point. The non-AP MLD may receive a third management frame over the first link or the second link on which the target access point is located, parse the third management frame to obtain information about the UHR capability set supported by the target access point, and determine one or more UHR technologies supported by the target access point.

Optionally, in the discovery process, the first management frame sent by the AP MLD may be a beacon frame, a probe response frame or multi-link probe response frame, or an ANQP response frame. The second management frame sent by the non-AP MLD may be a (multi-link) probe request frame or multi-link probe request frame, an ANQP request frame, or the like.

Optionally, the information about the UHR capability set may be carried in a capability set field of a current link, a multi-link element field, a reconfiguration multi-link element field, or an MBSSID field.

Optionally, the indication information may be carried in at least one of the following fields: an NR field, an RNR field, a multi-link element field, a reconfiguration multi-link element field, or an MBSSID field.

Optionally, the indication information may be represented by corresponding information added into a reserved field of the foregoing fields, or may be defined by using a combination of existing fields in the foregoing fields.

### II. Connection process

After discovering an AP MLD in the discovery process, the non-AP MLD may perform the following actions.
1. Sending a single-link connection request: the non-AP MLD may send the association request frame or reassociation request frame over the first link. The information about the UHR capability set supported by a station (or a link) of the non-AP MLD is carried in the association request frame or reassociation request frame.
2. Sending a multi-link connection request: the non-AP MLD may send the association request frame or reassociation request frame over the first link. The information about the UHR capability set supported by the station (or the link) of the non-AP MLD and the information about the UHR capability set supported by another station (or another link) of the non-AP MLD are carried in the association request frame or reassociation request frame.

After receiving the foregoing association request frame or reassociation request frame, the AP MLD may send an association response frame or reassociation response frame over the first link. The information about the UHR capability set supported by the access point and requested information about a UHR capability set supported by another access point are carried in the association response frame or the reassociation response frame.

After a connection is successfully established, the non-AP MLD and the AP MLD perform the information interaction on the one or more links by using the UHR technologies jointly supported by both parties.

### III. Fast roaming process

The non-AP MLD establishes a connection with the AP MLD. Then, under a certain condition, the AP MLD sends the BTM request frame to the non-AP MLD. The BTM request frame includes the information for indicating whether the neighboring access points of the access point support the UHR function and a UHR capability set supported by the access point that supports the UHR function.

After receiving the BTM request frame, the non-AP MLD sends the BTM response frame to the AP MLD. The BTM response frame may include the information about the UHR capability set supported by the target access point.

The non-AP MLD may send the single-link connection request or the multi-link connection request to the target access point to complete a roaming handover process.

FIG. 6 is a structural diagram of an information indication apparatus according to an embodiment of the present application. The information indication apparatus is integrated into an AP MLD. As shown in FIG. 6, the information indication apparatus may include a processing module 601 and a sending module 602.

Specifically, the processing module 601 is configured to generate a first management frame, where the first management frame carries information about a UHR capability set supported by an access point of the AP MLD.

The sending module 602 is configured to send the first management frame over a first link.

Based on the foregoing embodiments, optionally, the first management frame further includes indication information, and the indication information is used for indicating whether neighboring access points of the access point support a UHR function.

Based on the foregoing embodiments, optionally, the information indication apparatus further includes a receiving module.

Specifically, the receiving module is configured to receive a second management frame over the first link or a second link. The second management frame includes a UHR identifier of a target access point supporting the UHR function among the neighboring access points, and the second management frame is used for acquiring information about a UHR capability set supported by the target access point.

The sending module 602 is further configured to send a third management frame over the first link or the second link. The third management frame includes the information about the UHR capability set supported by the target access point.

Based on the foregoing embodiments, optionally, the indication information is carried in at least one of the following fields: an NR field, an RNR field, a multi-link element field, a reconfiguration multi-link element field, or an MBSSID field.

Based on the foregoing embodiments, optionally, the indication information is represented by one specific identifier or a combination of identifiers in the foregoing field.

Based on the foregoing embodiments, optionally, the information about the UHR capability set is carried in at least one of the following fields: a capability set field of a current link, a multi-link element field, a reconfiguration multi-link element field, or an MBSSID field.

Based on the foregoing embodiments, optionally, the information about the UHR capability set includes at least one of the following: coordinated orthogonal frequency division multiple access, coordinated spatial reuse, coordinated beamforming, non-primary channel access, coordinated time division multiple access, coordinated target wakeup time, a channel resource preemption technology, a relay technology, or a joint transmission technology.

Based on the foregoing embodiments, optionally, the first management frame and the third management frame include at least one of the following: a beacon frame, a probe response frame, a multi-link probe response frame, an ANQP response frame, an association response frame, a reassociation response frame, a BTM request frame, a link reconfiguration request frame, a link reconfiguration response frame, or a multi-link operation update response frame.

FIG. 7 is another structural diagram of an information indication apparatus according to an embodiment of the present application. The information indication apparatus is integrated into a non-AP MLD. As shown in FIG. 7, the information indication apparatus may include a receiving module 701 and a processing module 702.

Specifically, the receiving module 701 is configured to receive a first management frame over a first link, where the first management frame carries information about a UHR capability set supported by an access point of an AP MLD.

The processing module 702 is configured to perform information interaction with the access point according to the information about the UHR capability set.

Based on the foregoing embodiments, optionally, the first management frame further includes indication information, and the indication information is used for indicating whether neighboring access points of the access point support a UHR function.

Based on the foregoing embodiments, optionally, the first management frame is a BTM request frame, and the first management frame further includes information about a UHR capability set supported by an access point recommended by the AP MLD.

Based on the foregoing embodiments, optionally, the information indication apparatus further includes a sending module.

Specifically, the sending module is configured to send a second management frame over the first link or a second link, where the second management frame includes a UHR identifier of a target access point supporting the UHR function among the neighboring access points, and the second management frame is used for acquiring information about a UHR capability set supported by the target access point.

The receiving module 701 is further configured to receive a third management frame over the first link or the second link. The third management frame includes the information about the UHR capability set supported by the target access point.

Based on the foregoing embodiments, optionally, the second management frame further includes information about a UHR capability set supported by a station of the non-AP MLD through which the second management frame is sent.

Based on the foregoing embodiments, optionally, the second management frame further includes information about a UHR capability set supported by a station of the non-AP MLD other than a station through which the second management frame is sent.

Based on the foregoing embodiments, optionally, the second management frame includes at least one of the following: a probe request frame, a multi-link probe request frame, an ANQP request frame, an association request frame, a reassociation request frame, a link reconfiguration request frame, or a multi-link operation update request frame.

Based on the foregoing embodiments, optionally, the sending module is further configured to send a BTM response frame over the first link. The BTM response frame carries information about a UHR capability set supported by a target access point to be handed over to and/or information about a UHR capability set supported by another access point that belongs to the same AP MLD as the target access point.

Based on the foregoing embodiments, optionally, the indication information is carried in at least one of the following fields: an NR field, an RNR field, a multi-link element field, a reconfiguration multi-link element field, or an MBSSID field.

Based on the foregoing embodiments, optionally, the information about the UHR capability set includes at least one of the following: coordinated orthogonal frequency division multiple access, coordinated spatial reuse, coordinated beamforming, non-primary channel access, coordinated time division multiple access, coordinated target wakeup time, a channel resource preemption technology, a relay technology, or a joint transmission technology.

Based on the foregoing embodiments, optionally, the information about the UHR capability set is carried in at least one of the following fields: a capability set field of a current link, a multi-link element field, a reconfiguration multi-link element field, or an MBSSID field.

Based on the foregoing embodiments, optionally, the processing module 702 is specifically configured to perform, according to the information about the UHR capability set, the information interaction by using UHR technologies jointly supported by the access point and the non-AP MLD.

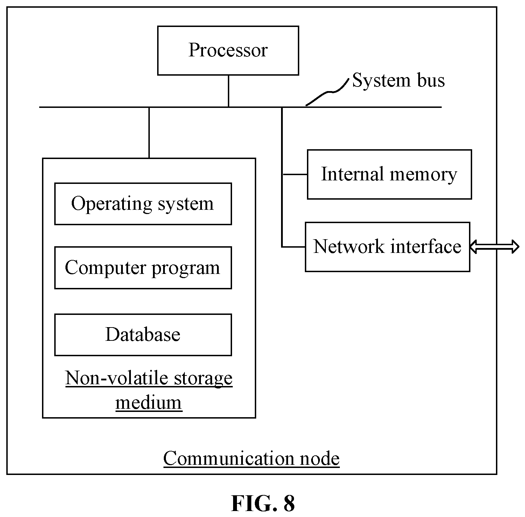

In an embodiment, a communication node is further provided, and the communication node includes a non-AP MLD or an AP MLD. A diagram of the internal structure of the foregoing communication node may be as shown in FIG. 8. The communication node includes a processor, a memory, a network interface, and a database connected via a system bus. The processor of the communication node is used for providing computing and control capabilities. The memory of the communication node includes a non-volatile storage medium and an internal memory. The non-volatile storage medium stores an operating system, a computer program, and a database. The internal memory provides an environment for the operation of the operating system and the computer program in the non-volatile storage medium. The database of the communication node is used for storing data generated during information indication. The network interface of the communication node is used for communicating with an external terminal via a network connection. When executed by the processor, the computer program causes the processor to perform the information indication method.

It is to be understood by those skilled in the art that the structure shown in FIG. 8 is a block diagram of some structures related to the solution of the present application and does not limit the communication node to which the solution of the present application is applied. The specific communication node may include more or fewer components than the components shown in the figure, may include a combination of some of the components shown in the figure, or may have a different arrangement of the components shown in the figure.

Embodiments of the present application further provide a computer-readable storage medium storing a computer program which, when executed by a processor, causes the processor to perform the following.

A first management frame is generated, where the first management frame carries information about a UHR capability set supported by an access point of an AP MLD.

The first management frame is sent over a first link.

Embodiments of the present application further provide a computer-readable storage medium storing a computer program which, when executed by a processor, causes the processor to perform the following.

A first management frame is received over a first link, where the first management frame carries information about a UHR capability set supported by an access point of an AP MLD.

Information interaction is performed with the access point according to the information about the UHR capability set.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list): an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any appropriate combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by using any appropriate medium including, but not limited to, a wireless medium, a wire, an optical cable, a radio frequency (RF), or any appropriate combination thereof.

Computer program codes for performing operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type appropriate for a local technical environment and may be implemented using any appropriate data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type appropriate for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An information indication method, applied to an access point multi-link device, AP MLD, comprising:
generating a first management frame, wherein the first management frame carries information about an ultra-high reliability, UHR, capability set supported by an access point of the AP MLD; and
sending the first management frame over a first link.

2. The information indication method according to claim 1, wherein the first management frame further comprises indication information, and the indication information is used for indicating whether neighboring access points of the access point support a UHR function.

3. The information indication method according to claim 2, further comprising:
receiving a second management frame over the first link or a second link, wherein the second management frame comprises a UHR identifier of a target access point supporting the UHR function among the neighboring access points, and the second management frame is used for acquiring information about a UHR capability set supported by the target access point; and
sending a third management frame over the first link or the second link, wherein the third management frame comprises the information about the UHR capability set supported by the target access point.

4. The information indication method according to claim 2, wherein the indication information is carried in at least one of the following fields:
a neighbor report, NR, field, a reduced neighbor report, RNR, field, a multi-link element field, a reconfiguration multi-link element field, or a multiple basic service set identifier, MBSSID, field.

5. The information indication method according to claim 4, wherein the indication information is represented by one specific identifier or a combination of identifiers in the at least one of the NR field, the RNR field, the multi-link element field, the reconfiguration multi-link element field, or the MBSSID field.

6. The information indication method according to claim 3, wherein the information about the UHR capability set is carried in at least one of the following fields:
a capability set field of a current link, a multi-link element field, a reconfiguration multi-link element field, or an MBSSID field.

7. The information indication method according to claim 1, wherein the information about the UHR capability set comprises at least one of the following:
coordinated orthogonal frequency division multiple access, C-OFDMA, coordinated spatial reuse, C-SR, coordinated beamforming, C-BF, non-primary channel access, coordinated time division multiple access, C-TDMA, coordinated target wakeup time, C-TWT, a channel resource preemption technology, a relay technology, or a joint transmission technology.

8. The information indication method according to claim 3, wherein the first management frame and the third management frame comprise at least one of the following:
a beacon frame, a probe response frame, a multi-link probe response frame, an access network query protocol, ANQP, response frame, an association response frame, a reassociation response frame, a basic service set transition management, BTM, request frame, a link reconfiguration request frame, a link reconfiguration response frame, or a multi-link operation update response frame.

9. An information indication method, applied to a non-access point multi-link device, non-AP MLD, comprising:
receiving a first management frame over a first link, wherein the first management frame carries information about an ultra-high reliability, UHR, capability set supported by an access point of an access point multi-link device, AP MLD; and
performing information interaction with the access point according to the information about the UHR capability set.

10. The information indication method according to claim 9, wherein the first management frame further comprises indication information and the indication information is used for indicating whether neighboring access points of the access point support a UHR function.

11. The information indication method according to claim 9, wherein the first management frame is a basic service set transition management, BTM, request frame, and the first management frame further carries information about a UHR capability set supported by an access point recommended by the AP MLD.

12. The information indication method according to claim 10, further comprising:
sending a second management frame over the first link or a second link, wherein the second management frame comprises an ultra-high reliability, UHR, identifier of a target access point supporting the UHR function among the neighboring access points, and the second management frame is used for acquiring information about a UHR capability set supported by the target access point; and
receiving a third management frame over the first link or the second link, wherein the third management frame comprises the information about the UHR capability set supported by the target access point.

13. The information indication method according to claim 12, wherein the second management frame further carries information about a UHR capability set supported by a station of the non-AP MLD through which the second management frame is sent.

14. The information indication method according to claim 12, wherein the second management frame further carries information about a UHR capability set supported by another station of the non-AP MLD other than a station through which the second management frame is sent.

15. The information indication method according to claim 12, wherein the second management frame comprises at least one of the following:
a probe request frame, a multi-link probe request frame, an access network query protocol, ANQP, request frame, an association request frame, a reassociation request frame, a link reconfiguration request frame, or a multi-link operation update request frame.

16. The information indication method according to claim 11, further comprising:
sending a BTM response frame over the first link, wherein the BTM response frame comprises at least one of the following: information about a UHR capability set supported by a target access point to be handed over to or information about a UHR capability set supported by another access point that belongs to a same AP MLD as the target access point.

17. The information indication method according to claim 10, wherein the indication information is carried in at least one of the following fields:
a neighbor report, NR, field, a reduced neighbor report, RNR, field, a multi-link element field, a reconfiguration multi-link element field, or a multiple basic service set identifier, MBSSID, field.

18. The information indication method according to claim 9, wherein the information about the UHR capability set comprises at least one of the following:
coordinated orthogonal frequency division multiple access, C-OFDMA, coordinated spatial reuse, C-SR), coordinated beamforming, C-BF, non-primary channel access, coordinated time division multiple access, C-TDMA, coordinated target wakeup time, C-TWT, a channel resource preemption technology, a relay technology, or a joint transmission technology.

19. The information indication method according to claim 9, wherein the information about the UHR capability set is carried in at least one of the following fields:
a capability set field of a current link, a multi-link element field, a reconfiguration multi-link element field, or an MBSSID field.

20. The information indication method according to claim 9, wherein performing the information interaction with the access point according to the information about the UHR capability set comprises:
performing, according to the information about the UHR capability set, the information interaction by using UHR technologies jointly supported by the access point and the non-AP MLD.

21. An information indication apparatus, integrated into an access point multi-link device, AP MLD, comprising:
a processing module configured to generate a first management frame, wherein the first management frame comprises information about an ultra-high reliability, UHR, capability set supported by an access point of the AP MLD; and
a sending module configured to send the first management frame over a first link.

22. An information indication apparatus, integrated into a non-access point multi-link device, non-AP MLD, comprising:
a receiving module configured to receive a first management frame over a first link, wherein the first management frame carries information about an ultra-high reliability, UHR, capability set supported by an access point of an access point multi-link device, AP MLD; and
a processing module configured to perform information interaction with the access point according to the information about the UHR capability set.

23. A communication node, comprising a memory and a processor, wherein the memory is configured to store a computer program which, when executed by the processor, causes the processor to perform the information indication method according to any one of claims 1 to 20.

24. A storage medium storing a computer program which, when executed by a processor, causes the processor to perform the information indication method according to any one of claims 1 to 20.
